# EUROPÄISCHE PATENTANMELDUNG

(11) **EP 4 664 219 A1**
(43) Veröffentlichungstag der Anmeldung: **17.12.2025**
(21) Anmeldenummer: 25173531.2
(22) Anmeldetag: 30.04.2025
(51) Int. Cl.: G05B 19/418, B08B 9/20, B67C 3/00

(54) **VERFAHREN ZUM BETREIBEN EINER BEHÄLTERBEHANDLUNGSANLAGE UND BEHÄLTERBEHANDLUNGSANLAGE**

(30) Priorität: 10.06.2024 DE 102024116107
(71) Anmelder: KHS GmbH, 44143 Dortmund (DE)
(72) Erfinder: Brill, Torben, 44143 Dortmund (DE)

(57) **Zusammenfassung**

Die Erfindung bezieht sich auf ein Verfahren zum Betreiben einer Behälterbehandlungsanlage (1) mit wenigstens einer Behälterbehandlungsvorrichtung (2) zum Behandeln von Behältern. Das Verfahren umfasst dabei die folgenden Schritte:
- Ermitteln (S100) von zumindest einem aktuellen Betriebs- und/oder Verbrauchsparameter (BVP) der Behälterbehandlungsvorrichtung (2),
- Ermitteln (S101) von zumindest einem, den aktuellen Betriebs- und/oder Verbrauchsparameter (BVP) beeinflussenden, physikalischen Umgebungsparameter (PUP),
- Bestimmen (S102) eines Bedarfs zumindest eines bereitzustellenden Betriebs- und/oder Verbrauchsmaterials in Abhängigkeit des ermittelten aktuellen Betriebs- und/oder Verbrauchsparameters (BVP) sowie in Abhängigkeit des ermittelten aktuellen physikalischen Umgebungsparameters (PUP) und
- Erzeugen (S103) zumindest einer Handlungsanweisung (10) zum Betrieb der Behälterbehandlungsanlage (1) bei Abweichung des ermittelten Bedarfs an bereitzustellenden Betriebs- und/oder Verbrauchsmaterial von einem zulässigen Bedarfswert.

## Beschreibung

Die Erfindung bezieht sich auf ein Verfahren zum Betreiben einer Behälterbehandlungsanlage sowie auf eine Behälterbehandlungsanlage. Insbesondere betrifft die Erfindung dabei ein Verfahren zum Betreiben einer Behälterbehandlungsanlage in der Getränkeverarbeitung, wie zum Beispiel einer Produktionslinie in der Getränkeindustrie.

Aus dem Stand der Technik ist eine Vielzahl diverser Verfahren und Vorrichtungen zum Behandeln bzw. Verarbeiten von Behältern bekannt, insbesondere auch Verfahren und Vorrichtungen zum Behandeln von Getränkebehältnissen. Bei der Behandlung von Behältern werden bekanntermaßen unterschiedlichste, in der Regel zeitlich aufeinanderfolgende Behandlungs- bzw. Verfahrensschritte vorgenommen.

Abhängig von dem gesamten Behandlungsprozess können je nach Produktions-oder Anwendungsfall verschiedene Behandlungsschritte durchgeführt werden, welche beispielsweise eine Behälterreinigung, eine Behältersterilisation, ein Befüllen, Verschließen, und/oder Etikettieren der Behälter umfassen können wie auch ein im Anschluss daran erfolgendes Verpacken und/oder Palettieren von befüllten Behältern.

Im Produktionsbetrieb wird eine Behälterbehandlungsanlage, insbesondere auch jede der einzelnen Anlagenkomponenten, wie Behandlungsvorrichtungen bzw. Maschinen, unter bestimmten Bedingungen betrieben, welche beispielsweise als charakteristische Bedingungen bzw. produktions- und/oder anlagenspezifisch definiert sind oder vorgegeben werden können. Die Behälterbehandlungsanlage verbraucht während des Produktionsbetriebs verschiedenste Ressourcen, und zwar auf unterschiedliche Weise, zum Beispiel zu verschiedenen Zeiten über den Produktionsprozess.

Derartige Betriebsbedingungen bzw. Verbrauchsbedingungen können beispielsweise anhand von festgelegten oder veränderlichen, insbesondere einstellbaren Parametern definiert werden. Über derartige Parameter, welche als quantifizierbare bzw. messbare Größen dienen und auch als Betriebs- und/oder Verbrauchsparameter zu verstehen sind, können einerseits die Produktions- bzw. Behandlungsprozesse in einer Behälterbehandlungsanlage hinsichtlich bestimmter Aspekte der Produktion angepasst und andererseits auch vergleichend analysiert werden.

Beim Betrieb einer Behälterbehandlungsanlage wird die Effizienz der Produktion bzw. der Anlage von verschiedensten Faktoren beeinflusst. Dabei gehen zum Beispiel anlagenspezifische wie auch allgemeine oder anlagenexterne Daten und Parameter in den Ressourcenverbrauch ein. Beispielsweise ist es hierzu bekannt, eine Produktions- und Ressourcenplanung sowie Prozesssteuerung durchzuführen und dazu ein so genanntes Produktionsleitsystem oder Fertigungsmanagementsystem einzusetzen, welches auch unter dem Begriff "Manufacturing Execution System" bzw. MES bekannt ist.

Es ist ein grundsätzliches Ziel in Produktionsprozessen, die Produktion und den Betrieb von Produktionsanlagen möglichst kostengünstig und ressourceneffizient zu gestalten. Bei den aus dem Stand der Technik bekannten Verfahren kommt es jedoch nach wie vor zu dem Problem, dass der Ressourcenverbrauch unter jeweiligen bestehenden Betriebsbedingungen eines Produktionsablaufs nicht der gewünschten (optimalen) Effizienz genügt. Daher besteht weiterhin Bedarf an verbesserten Verfahren zum Betreiben einer Behälterbehandlungsanlage.

Eine Aufgabe der Erfindung ist es, einen effizienteren Betrieb einer Behälterbehandlungsanlage zu ermöglichen.

Diese Aufgabe wird durch ein Verfahren zum Betreiben einer Behälterbehandlungsanlage gemäß den Merkmalen des unabhängigen Anspruchs 1 gelöst. Ferner wird zur Lösung der Aufgabe eine Behälterbehandlungsanlage gemäß den Merkmalen des Anspruchs 15 vorgeschlagen. Die abhängigen Ansprüche betreffen dabei besonders vorteilhafte Weiterbildungen der Erfindung.

Die vorliegende Erfindung stellt ein Verfahren zum Betreiben einer Behälterbehandlungsanlage mit wenigstens einer Behälterbehandlungsvorrichtung zum Behandeln von Behältern zur Verfügung. Das Verfahren umfasst dabei mehrere Schritte, nämlich einen Schritt des Ermittelns von zumindest einem aktuellen Betriebs- und/oder Verbrauchsparameter der zumindest einen Behälterbehandlungsvorrichtung, einen Schritt des Ermittelns von zumindest einem, den aktuellen Betriebs- und/oder Verbrauchsparameter beeinflussenden, physikalischen Umgebungsparameter, einen Schritt des Bestimmens eines Bedarfs zumindest eines bereitzustellenden Betriebs-und/oder Verbrauchsmaterials in Abhängigkeit des ermittelten aktuellen Betriebs-und/oder Verbrauchsparameters sowie in Abhängigkeit des ermittelten aktuellen physikalischen Umgebungsparameters und einen Schritt des Erzeugens zumindest einer Handlungsanweisung zum Betrieb der Behälterbehandlungsanlage bei Abweichung des ermittelten Bedarfs an bereitzustellenden Betriebs- und/oder Verbrauchsmaterial von einem zulässigen Bedarfswert.

Mit dem erfindungsgemäßen Verfahren wird eine Handlungsanweisung ausgegeben, und damit insbesondere einer Bedienperson der Behälterbehandlungsanlage bzw. einem Prozessverantwortlichen zur Verfügung gestellt, wenn bei Ermittlung des Bedarfs eines bereitzustellenden Betriebs- und/oder Verbrauchsmaterials in Abhängigkeit der herrschenden Betriebs- und/oder Verbrauchsparameter und der physikalischen Umgebungsparameter das ermittelte Ergebnis von einem zulässigen Bedarfswert abweicht, welcher zulässige Bedarfswert als Sollbedarfswert oder Sollverbrauchswert bzw. als Sollbedarf verstanden werden kann und im Wesentlichen einen Grenzwert bildet, bei dessen Überschreitung ein Eingriff bzw. eine Einflussnahme in den Betrieb angezeigt ist, beispielsweise aus Effizienzgründen oder aus Gründen der Ressourcenschonung.

Das erfindungsgemäße Verfahren ermöglicht damit, den Betrieb einer Behälterbehandlungsanlage bzw. den Betriebsablauf in einer solchen Behälterbehandlungsanlage unter der Berücksichtigung von Betriebs- und/oder Verbrauchsparametern zumindest einer Behälterbehandlungsvorrichtung der Behälterbehandlungsanlage sowie zugleich unter der Berücksichtigung von physikalischen Umgebungsparametern zu planen, zu beeinflussen und/oder zu steuern, nämlich insbesondere zu Gunsten einer Kosten- und Ressourceneinsparung und/oder hinsichtlich einer Leistungssteigerung. Das erfindungsgemäße Verfahren eröffnet damit die Möglichkeit, den Betrieb einer Behälterbehandlungsanlage bzw. den Betriebsablauf in einer solchen Behälterbehandlungsanlage zu optimieren, und zwar in Abhängigkeit von Betriebs- und/oder Verbrauchsparametern sowie physikalischer Umgebungsparameter.

Mit dem erfindungsgemäßen Verfahren kann insbesondere vorteilhaft die Maschinenverfügbarkeit der Behälterbehandlungsvorrichtung bzw. die Anlagenverfügbarkeit der gesamten Behälterbehandlungsanlage verbessert und/oder langfristig auf einem hohen Niveau gehalten werden. Die Anlagenverfügbarkeit ist eine wichtige Kennzahl bzw. Kenngröße für den produzierenden Betriebsbereich, wobei eine hohe Anlagenverfügbarkeit, als Grundvoraussetzung für eine effiziente Produktion im Fokus steht, so dass mit dem erfindungsgemäßen Verfahren auch eine effizientere Produktion erzielt werden kann. Insbesondere können der Betrieb der Behälterbehandlungsanlage und die Produktion auch effizienter geplant werden.

Das erfindungsgemäße Verfahren kann damit auch als Verfahren zum Optimieren des Betriebs einer Behälterbehandlungsanlage verstanden werden, insbesondere auch als Verfahren zur Erhöhung einer Ressourceneffizienz beim Betrieb einer Behälterbehandlungsanlage.

Unter "Betriebs- und/oder Verbrauchsparameter" fallen im Sinne der vorliegenden Erfindung Parameter oder Kenngrößen oder Bedingungen bzw. Faktoren, die Einfluss nehmen auf den Betrieb, insbesondere auf den Betriebsablauf und/oder auf die Funktion der Behälterbehandlungsanlage und/oder der zumindest einen Behälterbehandlungsvorrichtung. Ferner fallen im Sinne der vorliegenden Erfindung unter "Betriebs- und/oder Verbrauchsparameter" auch Parameter oder Kenngrößen oder Bedingungen bzw. Faktoren, die einen Verbrauch bzw. Verbrauchswert der Behälterbehandlungsanlage und/oder der zumindest einen Behälterbehandlungsvorrichtung betreffen bzw. beeinflussen.

Derartige Betriebs- und/oder Verbrauchsparameter können somit auch als Einflussgrößen bezeichnet werden, und können als Werte oder Zahlenwerte der einzelnen Größen verstanden werden, die bei einem bestimmten Betriebszustand der Behälterbehandlungsanlage und/oder der zumindest einen Behälterbehandlungsvorrichtung auftreten. Diese Größen können sich beispielsweise auch während des Betriebes verändern.

Im vorliegenden Verständnis können Betriebs- und/oder Verbrauchsparameter beispielsweise Parameter sein, die sich auf zumindest eines von zur Behandlung der Behälter verwendeten Behandlungsmedien und/oder eines abzufüllenden Füllguts beziehen, nämlich zum Beispiel eine Temperatur, ein Druck, eine Viskosität oder eine Menge (beispielsweise ein Füllstand) von Behandlungsmedien und/oder von Füllgut.

Betriebs- und/oder Verbrauchsparameter im vorliegenden Sinne können ebenso Verbrauchswerte von Ressourcen sein, wie etwa ein Energie- bzw. Stromverbrauch oder ein Wasserverbrauch und/oder oder ein Verbrauch von Medien, insbesondere von Behandlungsmedien, wie zum Beispiel Reinigungs- und/oder Sterilisationsmittel, Druckluft, Prozessgas oder dergleichen.

Als Betriebs- und/oder Verbrauchsparameter sind vorliegend auch eine Leistung und/oder eine Geschwindigkeit der Behälterbehandlungsanlage und/oder der wenigstens einen Behälterbehandlungsvorrichtung oder deren Vorrichtungsteilen anzusehen. Beispielsweise kann auch ein Durchsatz an zu behandelnden bzw. behandelten Behältern bzw. eine Durchsatzzahl an behandelten Behältern, nämlich ein Behälterdurchsatz, oder dergleichen als Betriebs- und/oder Verbrauchsparameter verstanden werden.

Das Ermitteln der "Betriebs- und/oder Verbrauchsparameter", insbesondere auch eines einzelnen oder mehrerer der genannten "Betriebs- und/oder Verbrauchsparameter", kann beispielsweise ein Erfassen oder Messen sein und insbesondere über eine sensorische Messung erfolgen, wobei hierfür Sensoren oder Messeinrichtungen, insbesondere auch Zähler oder dergleichen, vorgesehen sein können.

Unter den Begriff "physikalische Umgebungsparameter" fallen im Sinne der vorliegenden Erfindung quantifizierbare Größen bzw. Parameter oder Bedingungen bzw. Zustandsbedingungen betreffend die mittelbare oder unmittelbare Umgebung, in der die Behälterbehandlungsanlage und/oder die zumindest eine Behälterbehandlungsvorrichtung aufgestellt ist.

Als physikalischer Umgebungsparameter kann im vorliegenden Verständnis zum Beispiel eine Temperatur, insbesondere eine Lufttemperatur, berücksichtigt werden, wobei es sich um eine Innentemperatur handeln kann, die zum Beispiel in einer Halle, insbesondere einer Betriebs- oder Produktionshalle herrscht, in der sich die Behälterbehandlungsanlage befindet, oder um eine Außentemperatur in der Außenumgebung der Halle. Ein physikalischer Umgebungsparameter kann im vorliegenden Sinne zum Beispiel auch eine Luftfeuchte, einen Luftdruck, einen Niederschlagswert oder dergleichen umfassen.

Unter den Begriff "Betriebs- und/oder Verbrauchsmaterial" fallen im Sinne der vorliegenden Erfindung Materialien, die während des Betriebs bzw. für den Betrieb der Behälterbehandlungsanlage benötigt und/oder verbraucht werden. So sind beispielsweise zu behandelnde Behälter, Behälterverschlüsse, Etiketten, Behandlungsmedien und/oder Verpackungsmaterial, wie zum Beispiel Folie, Kartonzuschnitte, etc. als Betriebs- und/oder Verbrauchsmaterial zu verstehen.

Die erzeugte Handlungsanweisung kann im vorliegenden Verständnis beispielsweise ein Steuersignal sein, um die Behälterbehandlungsanlage und/oder die zumindest eine Behälterbehandlungsvorrichtung anzusteuern, insbesondere direkt und/oder automatisch anzusteuern. Dabei kann es sich zum Beispiel um ein von der Behälterbehandlungsanlage und/oder der zumindest einen Behälterbehandlungsvorrichtung auszuführendes, insbesondere automatisch auszuführendes, Steuersignal handeln. Beispielsweise kann die erzeugte Handlungsanweisung auch eine Ausgabe von optischen und/oder akustischen Informationen für Anlagenbediener umfassen, zum Beispiel über eine computergestützte Mensch-/Maschinen-Benutzerschnittstelle ("Human Machine Interface" bzw. HMI) mit einer Bedienoberfläche.

Mit der erzeugten Handlungsanweisung kann somit im Sinne der Erfindung beispielsweise der Anlagenbediener angewiesen oder aufgefordert werden, mit einer manuell auszuführenden Handlung bzw. Tätigkeit in den Betrieb bzw. Betriebsablauf einzugreifen. Gleichermaßen kann vorgesehen sein, dass eine als Steuersignal erzeugte Handlungsanweisung auch automatisch in den Betrieb bzw. Betriebsablauf eingreifen kann, ohne dass hierfür eine vom Benutzer zu ergreifende Maßnahme erforderlich wäre.

Gemäß einer bevorzugten Ausführungsvariante der Erfindung wird unter Berücksichtigung der Handlungsanweisung der Betrieb der Behälterbehandlungsvorrichtung gesteuert beeinflusst und/oder geändert. Diese Änderung des Betriebs kann mittelbar oder unmittelbar erfolgen. Zum Beispiel kann in Abhängigkeit der physikalischen Umgebungsparameter auch vorübergehend oder zeitweise eine Maschinenleistung oder Geschwindigkeit der Behälterbehandlungsvorrichtung reduziert werden, beispielsweise wenn die Leistungs- oder Geschwindigkeitsreduzierung bei den fraglichen physikalischen Umgebungsparametern zu einem verringerten Verbrauch an Betriebs-und/oder Verbrauchsmaterial führt.

Ebenso könnte durch die gesteuerte Einflussnahme unter Berücksichtigung der Handlungsanweisung, veranlasst werden, dass die Behälterbehandlungsvorrichtung und/oder gegebenenfalls einzelne, der Behälterbehandlungsvorrichtung zugehörige oder zugeordnete Komponenten, zumindest vorübergehend oder zeitweise unter geänderten Betriebsparametern weiterläuft, beispielsweise indem eine Prozesstemperatur angepasst bzw. umgestellt wird.

Weiterhin bevorzugt wird unter Berücksichtigung der Handlungsanweisung der Betrieb einer der Behälterbehandlungsvorrichtung vorgeschalteten Behandlungseinheit gesteuert beeinflusst und/oder geändert. Die gesteuerte Einflussnahme auf eine vorgeschaltete Behandlungseinheit kann in derselben Weise erfolgen, wie voranstehend für die Behälterbehandlungsvorrichtung selbst beschrieben ist.

Besonders bevorzugt ist die vorgeschaltete Behandlungseinheit dabei eine Temperiereinheit zum Temperieren der Behälter. Eine solche Temperiereinheit kann als Trocken-Inkubator zum Temperieren mittels temperierter Luft oder als Spritzung, Dusche oder Bad zum Temperieren mittels einer temperierten Flüssigkeit, insbesondere Wasser, ausgebildet sein. Eine gesteuerte Beeinflussung und/oder Änderung im Betrieb einer Temperiereinheit kommt insbesondere dann vorteilhaft zum Tragen, wenn der berücksichtigte fragliche physikalische Umgebungsparameter eine Temperatur ist und über die gesteuerte Beeinflussung und/oder Änderung des Betriebs der Temperiereinheit eine schonende Temperaturanpassung der Behälter erzielt wird.

Besondere Vorteile ergeben sich auch darüber, dass das Bestimmen des Bedarfs des zumindest einen bereitzustellenden Betriebs- und/oder Verbrauchsmaterials mittels eines computerbasierten Systems bzw. mittels einer Auswertelogik erfolgt, insbesondere mittels eines adaptiven, vorzugsweise selbstlernenden oder selbstoptimierenden Systems. Ganz besonders vorteilhaft erfolgt das Bestimmen des Bedarfs des zumindest einen bereitzustellenden Betriebs- und/oder Verbrauchsmaterials unter Verwendung eines auf künstlicher Intelligenz basierenden Modells (KI-Modells).

Ein Selbstlerneffekt kann noch verbessert werden, wenn die Auswertelogik bzw. das System eine Speichereinrichtung aufweist, in welcher frühere bzw. vorausgehende Auswerteergebnisse und insbesondere zugeordnete Anpassungs- und/oder Optimierung- und/oder Korrektursignale, beispielsweise chronologisch zuordenbar, abgespeichert sind. Die Auswertelogik bzw. das System ist damit in der Lage, zu erfassen, auf welche Weise die entsprechenden zugeordneten Anpassungs- und/oder Optimierung- und/oder Korrektursignale über die Zeit geändert worden sind. Über derartige Selbstlerneffekte, die auch als Optimierungsalgorithmen verstanden werden können, ist es vorteilhaft möglich, die Bestimmung des Bedarfs des zumindest einen bereitzustellenden Betriebs- und/oder Verbrauchsmaterials abermals und stetig zu optimieren.

Gemäß einer bevorzugten Ausführungsvariante des Verfahrens wird unter Berücksichtigung der Handlungsanweisung das Betriebs- und/oder Verbrauchsmaterial bereitgestellt und/oder dessen Bereitstellung angepasst. Beispielsweise kann die Handlungsanweisung ein Warnhinweis sein, dass unter der Bedingung der ermittelten physikalischen Umgebungsparameter ein erhöhter Verlust bzw. Ausschuss oder eine Qualitätseinbuße eines bestimmten Verbrauchsmaterials bestimmt wurde, wobei die Handlungsanweisung - quasi als Lösungsvorschlag - weiterhin Informationen umfasst, dass durch veränderte Bereitstellung des Verbrauchsmaterials dem erhöhten Verlust bzw. Ausschuss oder der Qualitätseinbuße entgegengewirkt werden kann.

Beispielsweise kann eine solche, in der Handlungsanweisung enthaltene Information sein, dass eines oder mehrere, beispielsweise in einem externen Lager gelagerte Verbrauchsmaterialien, abweichend von einer bedarfssynchronen Zuführung bzw. Bereitstellung, bereits vorzeitig, das heißt, asynchron zum tatsächlichen Bedarf bzw. Gebrauch in der Behälterbehandlungsvorrichtung, bereitgestellt werden. Dies bedeutet, dass Verbrauchsmaterialien beispielsweise bereits einige Zeit vor dem eigentlichen Behandlungszeitpunkt in die Hallenumgebung der Behälterbehandlungsanlage eingefahren werden. Die Bereitstellung kann somit basierend auf der Handlungsanweisung umgestellt werden von einer "Just-in-time" Bereitstellung in eine Bereitstellung vor dem tatsächlichen Gebrauch.

Dadurch ergeben sich insbesondere die Vorteile, dass die Verbrauchsmaterialien vor Gebrauch in der Behälterbehandlungsvorrichtung bereits an die in der Hallenumgebung der Behälterbehandlungsanlage herrschenden physikalischen Umgebungsparameter angepasst bzw. angeglichen werden, so dass die Betriebs- und/oder Verbrauchsparameter der entsprechenden Behälterbehandlungsvorrichtung wenig beeinflusst oder im Wesentlichen unbeeinflusst beibehalten bleiben. Dies kann auch als vorteilhafte, insbesondere schonende und rechtzeitige "Umgebungsadaptation" verstanden werden.

Vorzugsweise wird wenigstens ein Wetterparameter, insbesondere eine Lufttemperatur, als physikalischer Umgebungsparameter ermittelt. Wetterparameter sind als quantifizierbare Parameter fundamentale Größen, die das Wetter charakterisieren, wobei hierunter neben der Lufttemperatur insbesondere auch Größen, wie Luftfeuchte, Luftdruck, Niederschlag, Windaufkommen und dergleichen fallen.

Wie zuvor erwähnt, kann der Wetterparameter beispielsweise eine Außentemperatur in der Außenumgebung einer Produktionshalle sein, in welcher die Behälterbehandlungsanlage angeordnet ist. Alternativ oder zusätzlich kann vorgesehen sein, dass eine Innentemperatur in der Produktionshalle, in der die Behälterbehandlungsanlage angeordnet ist, als physikalischer Umgebungsparameter ermittelt wird.

Gemäß einer bevorzugten Ausführungsvariante des Verfahrens wird der wenigstens eine berücksichtigte physikalische Umgebungsparameter gemessen, insbesondere sensorisch erfasst. Alternativ wird der wenigstens eine berücksichtigte physikalische Umgebungsparameter über eine Datenfernverbindung aus einer Datenquelle, insbesondere einer öffentlich zugänglichen Datenquelle, abgerufen. So können besonders vorteilhaft beispielsweise Wetterdaten von örtlichen Wetterstationen abgerufen werden, insbesondere über eine Internetverbindung, zum Beispiel als Online-Wetterabfrage.

Gemäß einer bevorzugten Ausführungsvariante wird ein aktueller und/oder für die Zukunft prognostizierter physikalischer Umgebungsparameter als physikalischer Umgebungsparameter ermittelt. Durch Heranziehen bzw. Berücksichtigung zukünftiger, prognostizierter Wetterdaten ergeben sich insbesondere Vorteile dahingehend, dass rechtzeitig vor dem Eintreten ungünstiger physikalischer Umgebungsparameter, die den Verbrauch von Betriebs- und/oder Verbrauchsmaterial erhöhen würden, bereits reagiert werden kann, um basierend auf den Handlungsanweisungen Maßnahmen zu treffen, die dem erhöhten Verbrauch entgegenwirken bzw. einen solchen vermeiden können.

Bevorzugt werden der ermittelte aktuelle Betriebs- und/oder Verbrauchsparameter und/oder der ermittelte physikalische Umgebungsparameter über ein Datenkommunikationsnetzwerk an eine außerhalb der Behälterbehandlungsanlage befindliche externe Datenempfangs- und/oder -analyse und/oder -speichereinheit (beispielsweise an eine Cloud) übertragen. Es versteht sich, dass die Daten alternativ oder zusätzlich in einer in der Behälterbehandlungsanlage vorgesehenen Analyse- und/oder Steuereinheit bzw. Steuereinrichtung, somit also innerhalb der Behälterbehandlungsanlage, verarbeitet werden können. Solch eine in der Behälterbehandlungsanlage vorhandene Analyse- und/oder Steuereinheit bzw. Steuereinrichtung kann z.B. eine Rechnereinheit (IPC) und eine damit kommunizierend verbundene Steuereinheit (PLC) aufweisen und ggf. kommunizierend mit der externen Datenempfangs- und/oder - analyse und/oder -speichereinheit in Verbindung stehen.

Besondere Vorteile ergeben sich für das Verfahren, wenn die Handlungsanweisung an ein Empfangsgerät übermittelt und an einer Ausgabeeinheit des Empfangsgeräts ausgegeben wird. Ein derartiges Empfangsgerät kann als mobiles oder stationäres Empfangsgerät ausgebildet sein und kann zum Beispiel ein zentraler Rechner bzw.

Computer sein oder beispielsweise ein an der Behälterbehandlungsvorrichtung angeordneter Bildschirm oder Monitor oder ein Smartphone, ein Tablet, ein Laptop, etc. Das Empfangsgerät kann dabei in bzw. innerhalb der Behälterbehandlungsanlage und/oder in unmittelbarer räumlicher Nähe zu dieser vorgesehen sein. Es ist allerdings auch denkbar, dass das Empfangsgerät außerhalb der Behälterbehandlungsanlage vorgesehen ist und über eine Fernverbindung mit der Behälterbehandlungsanlage kommuniziert.

Bevorzugt kann der Betrieb der Behälterbehandlungsanlage über das Empfangsgerät gesteuert werden, zum Beispiel über eine auf dem Empfangsgerät installierte Anwendung oder Applikation, beispielsweise als App-Steuerung mittels einer auf einem Smartphone installierten mobilen App. Bei einer bevorzugten Ausführungsform ist vorgesehen, dass über das Empfangsgerät eine in der Behälterbehandlungsanlage vorhandene Steuereinheit bzw. Steuereinrichtung direkt parametriert werden kann.

Gemäß einer besonders bevorzugten Ausführungsvariante ist die Behälterbehandlungsvorrichtung als Reinigungsmaschine zum Reinigen von Glasbehälter, insbesondere Glasflaschen, ausgebildet und die Glasbehälter sind das bereitzustellende Betriebs- und/oder Verbrauchsmaterial. In dieser bevorzugten Ausführungsvariante wird als aktueller Betriebs- und/oder Verbrauchsparameter insbesondere ein Behälterdurchsatz der Reinigungsmaschine erfasst. Für die Bestimmung des Bedarfs der bereitzustellenden Glasbehälter wird zumindest eine Außentemperatur als physikalischer Umgebungsparameter ermittelt. Weiterhin umfasst die ausgegebene Handlungsweisung in dieser Ausführungsvariante, dass der Betrieb der Reinigungsmaschine und/oder die Bereitstellung der Glasbehälter für die Reinigungsmaschine angepasst wird.

Die beschriebene bevorzugte Ausführungsvariante stellt im Wesentlichen eine Optimierung des Betriebs einer so genannten Mehrweg-Glaslinie dar, welche beispielsweise Teil eines Produktionsbetriebs, beispielsweise einer Getränkeabfüllanlage ist, in der Mehrwegbehälter aus Glas verarbeitet bzw. behandelt werden, beispielsweise Getränke in Mehrweg-Glasflaschen abgefüllt, werden. Eine derartige Mehrweg-Glaslinie, welche auch als Produktionslinie bezeichnet werden kann, bildet dabei ein Beispiel für eine Behälterbehandlungsanlage im Sinne der vorliegenden Erfindung.

Die in Produktionsbetrieben, beispielsweise Abfüllbetrieben, mit einer solchen Mehrweg-Glaslinie behandelten Mehrweg-Glasbehälter durchlaufen in diesem "Mehrweg-System" mehrere Verwendungszyklen, wobei die Mehrweg-Glasbehälter in jedem dieser Zyklen nach Entleerung durch die Verbraucher wieder als Leergut an den Produktionsbetrieb zurückgegeben werden. Die zurückkehrenden Mehrweg-Glasbehälter müssen dabei in den Abfüllbetrieben zunächst einem Reinigungsprozess unterzogen werden, bevor sie in einem hygienisch einwandfrei gereinigten Zustand erneut mit einem Getränk befüllt werden können.

In der Regel werden die zum Abfüllbetrieb zurückgekehrten, leeren Behälter bis zu ihrer Wiederverwendung auf einer Freifläche bzw. einem Freigelände gelagert. Vor allem in Regionen in denen klimatisch bzw. jahreszeitlich bedingt, beispielsweise im Winter, die Temperatur im Freien stark absinkt, kann es zu großen Temperaturunterschieden bzw. Temperaturdifferenzen zwischen Außen- und Innenbereichen kommen, das heißt, die Außentemperatur auf dem Freigelände kann weit unterhalb einer Innentemperatur in einer Halle absinken, in der die Behälterbehandlungsanlage, nämlich die Produktionslinie, aufgestellt ist.

In Folge der hohen Temperaturdifferenz kommt es in solchen Fällen häufig beim Einfahren der leeren Behälter in die Produktionslinie, insbesondere in die in der Produktionslinie vorgesehene Reinigungsmaschine, zu einem erhöhten Glasbruch. Dies bedeutet nachteilig jedoch einen Verlust an Mehrweg-Glasbehältern, welcher in dem Abfüllbetrieb ausgeglichen werden muss, und zwar indem zusätzliche, neue Glasbehälter bereitgestellt werden. Dies bedeutet nachteilig einen erheblichen Kosten- und Ressourcenmehraufwand.

Mit dem vorliegenden Verfahren wird vorteilhaft ein Produktionsverantwortlicher bzw. eine Bedienperson der Behälterbehandlungsanlage auf das Problem des erhöhten Glasbruchs aufgrund aktueller oder für die nahe Zukunft prognostizierter niedriger oder sinkender Außentemperaturen hingewiesen. Insbesondere erhält der Betreiber bzw. die Bedienperson eine Handlungsanweisung, um auf das Problem entsprechend angemessen reagieren zu können und dabei einem vermehrten Glasbruch vorzubeugen. Dadurch kann die Produktion effizienter geplant und der Betrieb der Behälterbehandlungsanlage optimiert werden.

Beispielsweise kann bei dem vorliegenden Verfahren der Behälterdurchsatz der Reinigungsmaschine über Behälterzähler erfasst werden. Dabei ist es insbesondere auch möglich, derartige Behälterzähler in Maschinen, das heißt, in Behälterbehandlungsvorrichtungen bzw. -einrichtungen oder -einheiten, in der Peripherie der Reinigungsmaschine zu positionieren. Insbesondere können solche Behälterzähler in Maschinen und/oder Transporteuren positioniert sein, welche bezogen auf eine Behandlungsrichtung oder Verarbeitungsrichtung direkt vor und/oder hinter der Reinigungsmaschine angeordnet sind. Beispielsweise können die Glasbehälter in der Zuförderung und/oder Abförderung zur Reinigungsmaschine gezählt werden.

Vorzugsweise werden die erfassten Daten anschließend an eine Cloud übertragen, beispielsweise mithilfe einer Rechnereinheit, insbesondere eines Industriecomputers (IPC), und dort empfangen, gespeichert und analysiert, beispielsweise mittels einer Datenempfangs- und/oder Datenspeicher- und/oder Datenanalyseeinheit. Letztere ist vorzugsweise über eine Schnittstelle an eine öffentlich zugängliche Datenquelle, beispielsweise an das Internet, insbesondere an einen Internet- oder Online-Wetterdienst, angebunden und kann so die relevanten Daten, hier insbesondere die Wetterdaten bzw. Wetterprognosen, abfragen.

Die Analyseeinheit ermittelt anhand der Wetterdaten bzw. Wetterprognose sowie der erfassten Daten zum Behälterdurchsatz eine Prognose zum anstehenden Glasbruch. Bei Überschreiten eines bestimmten Werts wird eine Meldung an den Betreiber bzw. die Bedienperson, insbesondere an den Produktionslinienverantwortlichen, ausgegeben.

Beispielsweise kann die Meldung eine Handlungsanweisung sein oder eine solche enthalten. In dem vorliegenden Beispiel kann die Handlungsanweisung zum Beispiel ein Hinweis bzw. eine Anweisung sein, die Glasbehälter vor einem anstehenden Wetterumschwung, insbesondere Temperatursturz, und damit noch vor dem eigentlichen Bedarf im Behandlungsprozess, von dem auf dem Außengelände befindlichen Lagerplatz in den Innenraum der Halle der Produktionslinie einzufahren. Durch diese Handlungsweise wird ein Temperaturschock vermieden, wodurch ein vermehrter Glasbruch verhindert oder sogar ein im Normalbereich liegender Glasbruch reduziert werden kann.

Alternativ kann die Handlungsanweisung ein Steuersignal umfassen, über das vorübergehend die Leistung bzw. Geschwindigkeit der Behälterbehandlungsvorrichtung und/oder einer dieser vorgeschalteten Temperiereinheit gedrosselt wird. Ebenfalls kann die Handlungsanweisung ein Steuersignal umfassen, über das eine Temperatur der Temperiereinheit angepasst wird.

Die vorliegende Erfindung stellt auch eine Behälterbehandlungsanlage mit wenigstens einer Behälterbehandlungsvorrichtung zum Behandeln von Behältern bereit. Die Behälterbehandlungsanlage umfasst dabei eine Einrichtung zum Ermitteln von zumindest einem aktuellen Betriebs- und/oder Verbrauchsparameter der zumindest einen Behälterbehandlungsvorrichtung. Ferner weist die Behälterbehandlungsanlage eine Einrichtung zum Ermitteln von zumindest einem, den aktuellen Betriebs-und/oder Verbrauchsparameter beeinflussenden, physikalischen Umgebungsparameter auf, sowie außerdem eine Analyse- und/oder Steuereinrichtung. Die Analyse-und/oder Steuereinrichtung ist dazu eingerichtet, einen Bedarf zumindest eines bereitzustellenden Betriebs- und/oder Verbrauchsmaterials in Abhängigkeit des ermittelten aktuellen Betriebs- und/oder Verbrauchsparameters sowie in Abhängigkeit des ermittelten aktuellen physikalischen Umgebungsparameters zu bestimmen und bei Abweichung des ermittelten Bedarfs an bereitzustellenden Betriebs- und/oder Verbrauchsmaterial von einem zulässigen Bedarfswert zumindest eine Handlungsanweisung zum Betrieb der Behälterbehandlungsanlage zu erzeugen.

Die Erfindung wird im Folgenden anhand der Figuren an Ausführungsbeispielen näher erläutert. Es zeigen:
- Fig. 1: in stark vereinfachter Darstellung ein schematisches Übersichtsdiagramm zu dem Verfahrensablauf gemäß einer Ausführungsform des vorliegenden Verfahrens und
- Fig. 2: stark vereinfacht und nur grob schematisch skizziert eine gemäß einer Ausführungsvariante des vorliegenden Verfahrens betriebene Behälterbehandlungsanlage.

Die in den Figuren allgemein mit dem Bezugszeichen 1 bezeichnete Behälterbehandlungsanlage kann beispielsweise eine Produktionsanlage in der Getränkeindustrie, insbesondere eine Getränkeabfüllanlage, sein. Eine derartige Behälterbehandlungsanlage 1 kann mehrere aufeinanderfolgende bzw. hintereinander geschaltete Behandlungsstationen und/oder -maschinen umfassen, die auch als Behälterbehandlungsvorrichtungen 2 oder als Behandlungseinheiten 3, 4 bezeichnet werden können und die durch Förderer oder Transporteure miteinander verbunden sind, um Behälter zwischen den einzelnen Maschinen zu transportieren. Im vorliegenden Umfang kann eine Behälterbehandlungsanlage 1 eine oder mehrerer der folgenden Maschinen umfassen: Sortier- und/oder Ausrichtmaschinen, Reinigungsmaschinen, Pasteure, Füllmaschinen, Verschließmaschinen, Verpackungsmaschinen (Einpacker/Auspacker), Etikettiermaschinen, Bedruckungsmaschinen, Palettiermaschinen, Streckblasmaschinen oder dergleichen. Auch eine Einzelmaschine kann jedoch im Sinne der Erfindung als Behälterbehandlungsanlage 1 verstanden werden.

Generell sind zur Steuerung und/oder Regelung der Behälterbehandlungsanlage 1 sowie der genannten Maschinen und/oder der über diese laufenden Prozesse, dezentrale, maschinenbezogene und/oder zentrale Steuereinheiten mit zugehöriger Steuersoftware bzw. mit einer darin ausgeführten Steuerroutine vorgesehen. Die Steuereinheit(en) kann/können synonym auch als Steuerung, Steuereinrichtung, Analyse- und/oder Steuereinrichtung bezeichnet werden.

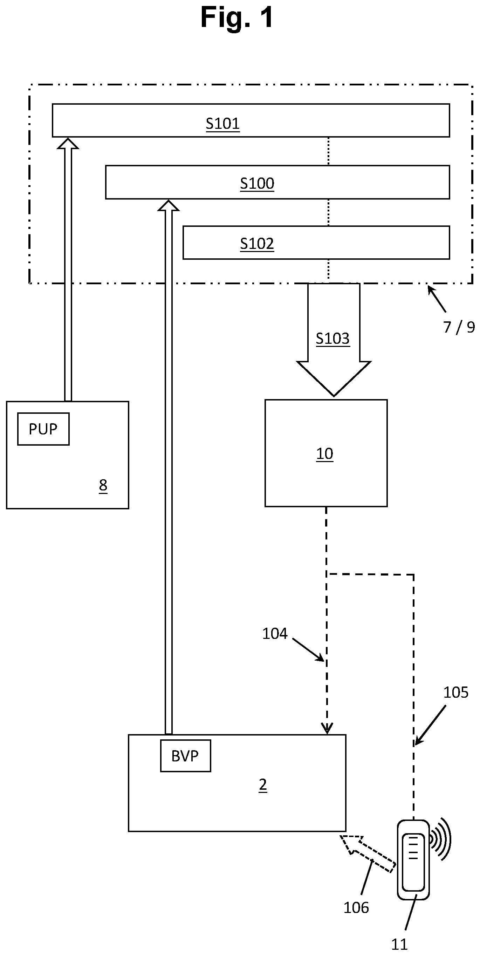

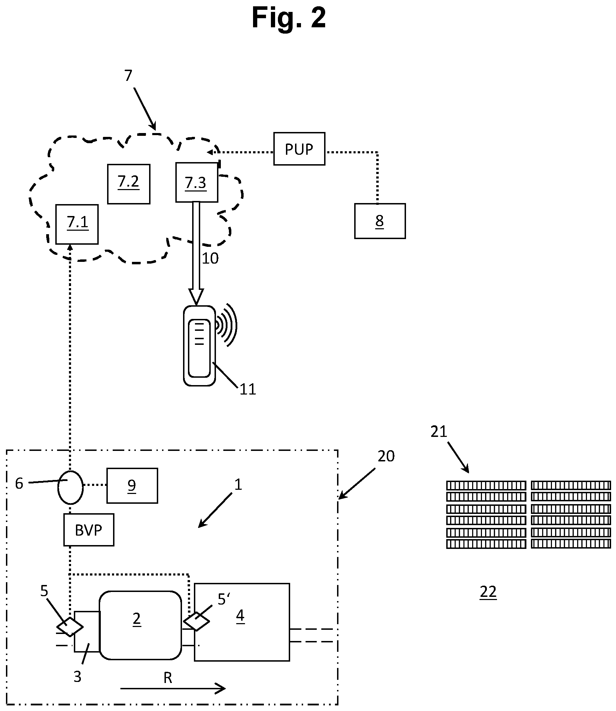

Die Figur 1 veranschaulicht anhand eines schematischen und stark vereinfachten Übersichtsdiagramms den Verfahrensablauf einer bevorzugten Ausführungsform des vorliegenden Verfahrens zum Betreiben einer Behälterbehandlungsanlage 1 (in Figur 1 nicht näher gekennzeichnet, siehe Figur 2), wobei das Verfahren mehrere Verfahrensschritte umfasst, die in der Figur 1 als Schritte S100 - S103 dargestellt und bezeichnet sind.

In der Behälterbehandlungsanlage 1, welche mindestens eine Behälterbehandlungsvorrichtung 2 aufweist, werden in Schritt S100 des Verfahrens aktuelle Betriebs-und/oder Verbrauchsparameter BVP als Kenngrößen des Betriebsablaufs ermittelt. Die Betriebs- und/oder Verbrauchsparameter BVP beziehen sich dabei insbesondere auf solche Größen bzw. Parameter oder Kennzahlen, die die Behälterbehandlungsvorrichtung 2 und deren Betrieb charakterisieren bzw. Einfluss auf deren Funktion haben. Die Betriebs- und/oder Verbrauchsparameter BVP werden insbesondere innerhalb der Behälterbehandlungsanlage 1 ermittelt, vorzugsweise in oder an der Behälterbehandlungsvorrichtung 2 selbst ermittelt, beispielsweise über entsprechende Messeinrichtungen und oder Sensoren.

Messbare Betriebs- und/oder Verbrauchsparameter BVP können beispielsweise eine Temperatur, ein Druck, eine Viskosität oder eine Menge (beispielsweise ein Füllstand) von Behandlungsmedien und/oder von Füllgut sein. Ebenso kann ein Energie- bzw. Stromverbrauch oder ein Wasser- bzw. Medienverbrauch als Betriebs- und/oder Verbrauchsparameter BVP gemessen werden, oder eine Maschinenleistung oder ein Durchsatz an zu behandelnden bzw. behandelten Behältern.

Neben den aktuellen Betriebs- und/oder Verbrauchsparametern BVP, das heißt, zusätzlich zu diesen, werden bei dem Verfahren in Schritt S101 ferner physikalische Umgebungsparameter PUP ermittelt, die in mittelbarer oder unmittelbarer Wirkung Einfluss auf die Betriebs- und/oder Verbrauchsparameter BVP haben bzw. nehmen können. Die physikalischen Umgebungsparameter PUP können dabei auch außerhalb der Behälterbehandlungsvorrichtung 2 und außerhalb der Behälterbehandlungsanlage 1 ermittelt werden und beziehen sich beispielsweise auf externe Parameter, zum Beispiel auf Wetterdaten, in der näheren oder weiteren Umgebung der Behälterbehandlungsanlage 1. Die physikalischen Umgebungsparameter PUP können dabei beispielsweise auch von externen Datenquellen 8 abgerufen werden.

Die ermittelten Betriebs- und/oder Verbrauchsparameter BVP sowie die ermittelten physikalischen Umgebungsparameter PUP werden in einer der Behälterbehandlungsanlage 1 zugeordneten Analyse- und/oder Steuereinrichtung 9 verarbeitet und/oder an eine außerhalb der Behälterbehandlungsanlage 1 befindliche externe Datenempfangs- und/oder Datenanalyse- und/oder -speichereinheit 7 (beispielsweise eine Cloud) zur dortigen Verarbeitung übertragen. Die Analyse- und/oder Steuereinrichtung 9 und die externe Datenempfangs- und/oder Datenanalyse- und/oder - speichereinheit 7 sind vorzugsweise kommunizierend miteinander verbunden, wobei der Analyse- und/oder Steuereinrichtung 9 ferner eine Rechnereinheit 6 (vgl. Figur 2) zugeordnet sein kann. Die Datenübertragung erfolgt beispielsweise über ein Datenkommunikationsnetzwerk.

In der Analyse- und/oder Steuereinrichtung 9 bzw. in der Datenempfangs- und/oder Datenanalyse- und/oder -speichereinheit 7 wird sodann in dem Schritt S102 ein Bedarf für zumindest ein Betriebs- und/oder Verbrauchsmaterial ermittelt, und zwar unter Berücksichtigung der in den Schritten S100 und S101 ermittelten Daten und/oder Werte bzw. Größen zu den aktuellen Betriebs- und/oder Verbrauchsparametern BVP und zu den physikalischen Umgebungsparametern PUP. Der Bedarf an Betriebs-und/oder Verbrauchsmaterial, ist im Wesentlichen definiert als die Menge eines vorgegebenen, fraglichen Betriebs- und/oder Verbrauchsmaterials, welches für einen in der Behälterbehandlungsanlage 1 durchzuführenden Produktionsprozess oder Produktionsablauf bereitgestellt werden muss.

Der in Schritt S102 ermittelte Bedarf für das zumindest eine Betriebs- und/oder Verbrauchsmaterial wird sodann verglichen mit einem Vergleichswert, der ein zu erwartender Bedarfswert bzw. Sollwert oder Normalwert ist und als zulässiger Bedarf oder als zu erwartender Bedarf, insbesondere als Normbedarf oder Sollbedarf oder Grenzbedarf unter im Wesentlichen Normal- oder Idealbedingungen eines Produktionsprozesses angesehen und eingestuft wird. Insbesondere gibt der Vergleichswert denjenigen Bedarf an, der unter solchen als "normal" oder "ideal" anzunehmenden physikalischen Umgebungsparametern PUP zu erwarten ist.

Bei einer sich ergebenden Abweichung aus dem Vergleich des in Schritt S102 ermittelten Bedarfs mit dem zulässigen Bedarf, insbesondere bei einer Abweichung die außerhalb eines vorgebbaren, definierbaren oder akzeptablen Abweichungsbereichs oder -limits liegt, wird gemäß Schritt S103 eine Handlungsanweisung 10 erzeugt und ausgegeben. Im Beispiel der Figur 1 erfolgt die Ausgabe der Handlungsanweisung 10 über die Analyse- und/oder Steuereinrichtung 9 bzw. in der Datenempfangs-und/oder Datenanalyse- und/oder -speichereinheit 7.

Die Handlungsanweisung 10 kann ein Steuersignal umfassen, das beispielsweise an die Behälterbehandlungsanlage 1 ausgegeben und übermittelt wird, insbesondere direkt an die Behälterbehandlungsanlage 1 oder direkt an die Behälterbehandlungsvorrichtung 2. Über das Steuersignal kann beispielsweise der Betrieb der Behälterbehandlungsvorrichtung 2 beeinflusst oder geändert werden, insbesondere automatisch. Eine mögliche direkte Übermittlung der Handlungsanweisung 10 in Form eines Steuersignals ist in Figur 1 durch die mit dem Pfeil mit Bezugszeichen 104 gekennzeichnete Linie angedeutet.

Eine derartige, den Betrieb der Behälterbehandlungsvorrichtung 2 unmittelbar, insbesondere automatisch beeinflussende oder ändernde Steuerung kann beispielsweise eine Temperaturanpassung umfassen, indem etwa durch entsprechende Ansteuerung von Temperiereinheiten ein Temperieren der Behälter angepasst wird oder indem durch entsprechende Ansteuerung eine Maschinenleistung bzw. Durchsatzgeschwindigkeit der Behälterbehandlungsvorrichtung 2 angepasst wird.

Alternativ oder zusätzlich kann die Handlungsanweisung 10 ein an eine Bedienperson oder eine Produktionsverantwortliche gerichtetes Signal oder eine Information und/oder eine Handlungsempfehlung zum manuellen Einschreiten in den Betrieb bzw. Betriebsablauf, umfassen. In diesem Fall wird die Handlungsanweisung 10 beispielsweise an ein Empfangsgerät 11 mit einer Ausgabeeinheit, zum Beispiel an ein Smartphone, ausgegeben und übermittelt. Auf diese Weise kann die Information und/oder die Handlungsempfehlung zum Einschreiten unmittelbar der Bedienperson bzw. Produktionsverantwortlichen zur Verfügung gestellt werden. Die mögliche direkte Übermittlung der Handlungsanweisung 10 an das Empfangsgerät 11 ist in Figur 1 durch die mit dem Pfeil mit Bezugszeichen 105 gekennzeichnete Linie angedeutet.

Hierbei kann insbesondere auch vorgesehen sein, dass basierend auf der an das Empfangsgerät 11 übertragenen Handlungsanweisung 10 der Betrieb der Behälterbehandlungsvorrichtung 2 über das Empfangsgerät 11 gesteuert wird, wie in Figur 1 durch den Pfeil 106 angedeutet ist. Dies kann zum Beispiel mithilfe einer auf dem Empfangsgerät 11 installierten Anwendung bzw. Applikation erfolgen, z.B. als App-Steuerung mittels einer mobilen App auf dem Smartphone 11, wobei denkbar ist, dass die Steuerung etwa durch einfaches Quittieren der angezeigten Handlungsanweisung 10 in der App veranlasst werden kann.

Mit Bezug auf die Figur 2 wird das Verfahren nunmehr anhand eines konkreten Ausführungsbeispiels einer als Mehrweg-Glasflaschen-Linie ausgebildeten Behälterbehandlungsanlage 1 mehr im Detail beschrieben.

Die als Mehrweg-Glasflaschen-Linie ausgebildete Behälterbehandlungsanlage 1 ist beispielsweise eine Abfüllanlage bzw. Abfüll-Linie in der Getränkeindustrie, die zur Behandlung bzw. Verarbeitung von Mehrweg-Glasflachen eingerichtet ist und in der die Mehrweg-Glasflaschen mit Getränken befüllt werden. Die Mehrweg-Glasflaschen-Linie 1 weist dazu mehrere in einer generellen Behandlungs- bzw. Verarbeitungsrichtung R aufeinanderfolgende Behandlungsstationen auf.

Bekanntermaßen im Rahmen des Mehrweg-Systems als Leergut zur Wiederverwendung in den Abfüllbetrieb zurückkehrenden, entleerten Mehrweg-Glasflaschen werden in der entsprechenden Mehrweg-Glasflaschen-Linie 1 neu befüllt und bis zur Verwendung beispielsweise in Form von Leergut-Paletten 21 gelagert und gesammelt, und zwar auf einer Außenfläche oder in einem Außenbereich 22 auf dem Betriebsgelände, auf welchem sich auch die in einer Halle 20 bzw. Produktionshalle aufgestellte Mehrweg-Glasflaschen-Linie 1 befindet.

In einem regelrechten Betriebsablauf werden die leeren Glasflaschen somit zum Beispiel am Ort ihrer Lagerung, nämlich im Außenbereich 22 bzw. in der Umgebung 22 der Halle, mittels Leergut-Paletten 21 bereitgestellt und bedarfssynchron, das heißt, erst zum Zeitpunkt des Gebrauchs, in die Halle 20 eingefahren, um dort den Produktionsprozess, nämlich den Abfüllprozess mit sämtlichen zugehörigen Behandlungen, durchzuführen.

Für eine effiziente, insbesondere hygienische Reinigung des Leerguts vor der erneuten Befüllung mit Füllgut ist zumindest eine als Reinigungsmaschine zum Reinigen der Glasflaschen ausgebildete Behälterbehandlungsvorrichtung 2 vorgesehen, wobei die Reinigungsmaschine 2 im Wesentlichen am Anfang der Mehrweg-Glasflaschen-Linie 1 angeordnet ist bzw. eine der anfänglichen Behandlungsstationen innerhalb der Mehrweg-Glasflaschen-Linie 1 bildet, so dass die Glasflaschen bei bzw. unmittelbar nach dem Einfahren in die Halle 20 dort im Wesentlichen direkt der Reinigungsmaschine 2 zugeführt werden.

Insbesondere jahreszeitlich bedingt, wenn beispielsweise in Wintermonaten die Außentemperatur sehr niedrig ist oder stark absinkt, können hierbei große Temperaturunterschiede zwischen dem Lagerort des Leerguts, nämlich außerhalb der Produktionshalle 20, und dem Behandlungs- bzw. Verarbeitungsort, nämlich innerhalb der Produktionshalle 20, vorherrschen. Die leeren Glasflaschen müssen diesem Temperaturunterschied standhalten, wenn sie in die Produktionshalle 20 eingebracht werden.

Ferner ist hierbei zu berücksichtigen, dass die Glasflaschen in der Reinigungsmaschine 2 in zumindest einigen der Prozessschritte, einem Reinigungsmedium mit einer gegenüber der Umgebungstemperatur erhöhten bzw. stark erhöhten Behandlungstemperatur ausgesetzt werden.

Aus den genannten Gründen und Gegebenheiten ist in der Mehrweg-Glasflaschen-Linie 1 daher in der Regel mit einem Glasbruch, nämlich mit einer Glasbruchrate, zu rechnen. Die bei einem vorgegebenen Produktionsprozess in der Mehrweg-Glasflaschen-Linie 1 zu erwartende Glasbruchrate kann jeweils bestimmt werden. Insbesondere kann die Bestimmung abhängig von ausgewählten Betriebs- und/oder Verbrauchsparametern BVP erfolgen und beispielsweise auch formatabhängig und/oder anwendungsabhängig und/oder linien- bzw. maschinenabhängig.

Die zu erwartenden Glasbruchrate wird, insbesondere abhängig von den entsprechenden ausgewählten Betriebs- und/oder Verbrauchsparametern BVP, beispielsweise über vorgegebene, spezifische Algorithmen bestimmt, und zwar insbesondere auch unter Verwendung und Berücksichtigung von Erfahrungswerten bezüglich der Mehrweg-Glasflaschen-Linie 1 und/oder des spezifischen Produktionsprozesses.

Die Bestimmung der Glasbruchrate kann vorliegend auch als Glasbruchprognose bezeichnet werden und wird beispielsweise spezifisch für einen jeweiligen speziellen Anwendungsfall durchgeführt. Über die Glasbruchprognose bzw. anhand der Glasbruchrate bestimmt sich schließlich der Bedarf an bereitzustellenden leeren Glasflaschen für eine Abfüllung, wobei die leeren Glasflaschen in einer Menge bereitgestellt werden müssen, so dass der aufgrund des Glasbruchs entstehende Verlust ausgeglichen wird. Die bereitzustellende Menge an leeren Glasflaschen ist somit eine den Verlust durch Glasbruch ausgleichende Übermenge, wobei diese Übermenge den Bedarf an Glasflaschen für eine vorgegebene Produktion bzw. für einen vorgegebenen Produktionsdurchlauf angibt.

Im konkreten Beispiel der Figur 2 wird der Glasbruch bzw. die Glasbruchrate mittels des vorliegenden Verfahrens in Abhängigkeit von Wetterdaten, insbesondere in Abhängigkeit einer vorhergesagten Außentemperatur, bestimmt bzw. prognostiziert.

Mehr im Detail wird hierzu ein aktueller Flaschendurchsatz, nämlich eine Anzahl von in der Reinigungsmaschine 2 behandelten Glasflaschen erfasst, wobei der erfasste Flaschendurchsatz einen aktuellen Betriebs- und/oder Verbrauchsparameter BVP der Reinigungsmaschine 2 darstellt. Die Erfassung des Flaschendurchsatzes der Reinigungsmaschine 2 erfolgt hierbei sensorisch über eine Sensoreinrichtung umfassend einen oder mehrere Flaschenzähler 5, 5', die beispielhaft in der Peripherie der Reinigungsmaschine 2 positioniert sind, nämlich insbesondere im Bereich der Zu-und/oder Abförderung zur Reinigungsmaschine 2, und dabei beispielsweise im Bereich von vor und/oder hinter der Reinigungsmaschine 2 angeordneten Transporteuren oder im Bereich von Behandlungseinheiten 3, 4, die der Reinigungsmaschine 2 in Verarbeitungsrichtung R vor- bzw. nachgeordnet sind.

Die Sensoreinrichtung mit den zugehörigen Flaschenzählern 5, 5' steht in kommunizierender Verbindung mit einer Rechnereinheit 6, insbesondere mit einem Industriecomputer (IPC), die ihrerseits bzw. der seinerseits mit einer Steuerung bzw. mit einer Analyse- und/oder Steuereinheit 9, insbesondere mit einer speicherprogrammierbaren Steuerung (PLC) verbunden ist.

Über die mit der Analyse- und/oder Steuereinheit 9 kommunizierende Rechnereinheit 6 wird der erfasste Flaschendurchsatz BVP im Beispiel der Figur 2 an eine externe Datenempfangs- und/oder -analyse- und/oder -speichereinheit 7, welche im Beispiel der Figur 2 als Cloudausgebildet ist, übermittelt bzw. übertragen. Die übertragenen Daten zum Flaschendurchsatz BVP werden in der Cloud mittels der dortigen Datenempfangseinheit 7.1 empfangen und gegebenenfalls zumindest temporär gespeichert bzw. zwischengespeichert und zur Analyse und Auswertung an die Datenanalyseeinheit 7.2 der Cloud weitergeleitet, um mittels der Analyse und Auswertung bzw. mittels Datenverarbeitung unter Anwendung des entsprechenden Algorithmus die Glasbruchprognose zu erstellen.

Zumindest die Datenanalyseeinheit 7.2 ist weiterhin über eine Schnittstelle an eine externe Datenquelle 8, im Beispiel der Figur 2 an eine öffentlich zugängliche Datenquelle 8 eines Wetterdienstes, beispielsweise eines Online-Wetterdienstes im Internet, angebunden. Aus dieser externen Datenquelle 8 werden mittels der Datenanalyseeinheit 7.2 physikalische Umgebungsparameter PUP in Form von Wetterdaten abgefragt und bei der Datenauswertung bzw. -analyse, nämlich für die Glasbruchprognose, mitverarbeitet.

Die Wetterdaten PUP werden insbesondere als Wettervorhersagedaten, nämlich als für die nahe Zukunft prognostizierte Wetterdaten, abgefragt, wobei im konkreten Ausführungsbeispiel der Figur 2 die vorhergesagte Außentemperatur bzw. Lufttemperatur im Umfeld der Umgebung 22 der Halle 20 abgefragt und in der Datenanalyseeinheit 7.2 bei der Glasbruchprognose berücksichtigt wird.

Wie oberhalb bereits beschrieben, herrschen bei niedrigen Außentemperaturen derart große Temperaturunterschiede zwischen dem als Lagerplatz dienenden Außenbereich 22 und dem Innenraum in der Halle 20, dass die Glasbruchrate durch niedrige Außentemperaturen negativ beeinflusst wird.

Übersteigt nun die in der Datenanalyseeinheit 7.2 unter Berücksichtigung bzw. auf Grundlage der über die Wettervorhersage prognostizierten Außentemperatur PUP ermittelte bzw. berechnete Glasbruchrate einen definierbaren und als zulässige Abweichung anerkannten Wert, so wird eine Handlungsanweisung 10 ausgegeben. Die Handlungsanweisung 10 ist im dargestellten, konkreten Beispiel der Figur 2 eine von einer Speicher- und/oder Sendeeinheit 7.3 in der Cloud ausgegebene und an ein Empfangsgerät 11, übermittelte Meldung an eine Bedienperson oder Produktionsverantwortliche.

Das Empfangsgerät 11 ist beispielhaft ein mobiles Empfangsgerät 11 in Form eines Mobiltelefons bzw. Smartphones. Die Handlungsanweisung 10 ist zum Beispiel ein informativer Warnhinweis über den anstehenden Temperaturabfall und die damit verbundene, erhöhte Glasbruchrate, wobei der Warnhinweis mit einer aktiven Aufforderung bzw. Handlungsempfehlung verbunden sein kann, die im Außenbereich 22 gelagerten leeren Glasflaschen zeitlich vor dem Temperatureinbruch in die Halle 20 einzufahren, um zu vermeiden, dass ein erhöhter Glasbruch durch große Temperaturdifferenzen ausgelöst wird.

### Bezugszeichenliste

- 1: Behälterbehandlungsanlage
- 2: Behälterbehandlungsvorrichtung
- 3, 4: vor- bzw. nachgeschaltete Behandlungseinheit
- 5, 5': Sensor, Flaschenzähler
- 6: Rechnereinheit
- 7: externe Datenempfangs- und/oder Datenanalyse- und/oder -speichereinheit
- 7.1: Datenempfangseinheit
- 7.2: Datenanalyseeinheit
- 7.3: Speicher- und/oder Sendeeinheit
- 8: externe Datenquelle
- 9: Analyse- und/oder Steuereinheit
- 10: Handlungsanweisung
- 11: Empfangsgerät

- 20: Halle, Produktionshalle
- 21: Leergut-Paletten
- 22: Außenbereich, Umgebung

- 104: Steuersignal
- 105: Übermittlung der Handlungsanweisung an Empfangsgerät
- 106: App-Steuerung

- BVP: Betriebs- und/oder Verbrauchsparameter
- PUP: physikalischer Umgebungsparameter
- R: Verarbeitungsrichtung

- S100 - S103: Schritte des Verfahrens

## Patentansprüche

1. Verfahren zum Betreiben einer Behälterbehandlungsanlage (1) mit wenigstens einer Behälterbehandlungsvorrichtung (2) zum Behandeln von Behältern, umfassend die Schritte:
- Ermitteln (S100) von zumindest einem aktuellen Betriebs- und/oder Verbrauchsparameter (BVP) der zumindest einen Behälterbehandlungsvorrichtung (2),
- Ermitteln (S101) von zumindest einem, den aktuellen Betriebs- und/oder Verbrauchsparameter (BVP) beeinflussenden, physikalischen Umgebungsparameter (PUP),
- Bestimmen (S102) eines Bedarfs zumindest eines bereitzustellenden Betriebs- und/oder Verbrauchsmaterials in Abhängigkeit des ermittelten aktuellen Betriebs- und/oder Verbrauchsparameters (BVP) sowie in Abhängigkeit des ermittelten aktuellen physikalischen Umgebungsparameters (PUP) und
- Erzeugen (S103) zumindest einer Handlungsanweisung (10) zum Betrieb der Behälterbehandlungsanlage (1) bei Abweichung des ermittelten Bedarfs an bereitzustellenden Betriebs- und/oder Verbrauchsmaterial von einem zulässigen Bedarfswert.

2. Verfahren nach Anspruch 1, **dadurch gekennzeichnet, dass** unter Berücksichtigung der Handlungsanweisung (10) der Betrieb der Behälterbehandlungsvorrichtung (2) gesteuert beeinflusst und/oder geändert wird.

3. Verfahren nach Anspruch 1 oder 2, **dadurch gekennzeichnet, dass** unter Berücksichtigung der Handlungsanweisung (10) der Betrieb einer der Behälterbehandlungsvorrichtung (2) vorgeschalteten Behandlungseinheit (3) gesteuert beeinflusst und/oder geändert wird.

4. Verfahren nach Anspruch 3, **dadurch gekennzeichnet, dass** die vorgeschaltete Behandlungseinheit (3) eine Temperiereinheit zum Temperieren der Behälter ist.

5. Verfahren nach einem der vorhergehenden Ansprüche, **dadurch gekennzeichnet, dass** das Bestimmen (S102) des Bedarfs des zumindest einen bereitzustellenden Betriebs- und/oder Verbrauchsmaterials unter Verwendung eines Kl-Modells erfolgt.

6. Verfahren nach einem der vorhergehenden Ansprüche, **dadurch gekennzeichnet, dass** unter Berücksichtigung der Handlungsanweisung (10) das Betriebs-und/oder Verbrauchsmaterial bereitgestellt wird und/oder dessen Bereitstellung angepasst wird.

7. Verfahren nach einem der vorhergehenden Ansprüche, **dadurch gekennzeichnet, dass** wenigstens ein Wetterparameter, insbesondere eine Lufttemperatur, als physikalischer Umgebungsparameter (PUP) ermittelt wird.

8. Verfahren nach einem der vorhergehenden Ansprüche, **dadurch gekennzeichnet, dass** eine Innentemperatur in einer Produktionshalle (20), in der die Behälterbehandlungsanlage (1) angeordnet ist, als physikalischer Umgebungsparameter ermittelt (PUP) wird.

9. Verfahren nach einem der vorhergehenden Ansprüche, **dadurch gekennzeichnet, dass** der wenigstens eine berücksichtigte physikalische Umgebungsparameter (PUP) gemessen, insbesondere sensorisch erfasst, wird oder über eine Datenfernverbindung aus einer Datenquelle, insbesondere einer öffentlich zugänglichen Datenquelle (8), abgerufen wird.

10. Verfahren nach einem der vorhergehenden Ansprüche, **dadurch gekennzeichnet, dass** ein aktueller und/oder für die Zukunft prognostizierter physikalischer Umgebungsparameter (PUP) als physikalischer Umgebungsparameter (PUP) ermittelt wird.

11. Verfahren nach einem der vorhergehenden Ansprüche, **dadurch gekennzeichnet, dass** der ermittelte aktuelle Betriebs- und/oder Verbrauchsparameter (BVP) und/oder der ermittelte physikalische Umgebungsparameter (PUP) über ein Datenkommunikationsnetzwerk an eine außerhalb der Behälterbehandlungsanlage (1) befindliche externe Datenempfangs- und/oder -analyse und/oder -speichereinheit (7) übertragen werden.

12. Verfahren nach einem der vorhergehenden Ansprüche, **dadurch gekennzeichnet, dass** die Handlungsanweisung (10) an ein Empfangsgerät (11) übermittelt und an einer Ausgabeeinheit des Empfangsgeräts (11) ausgegeben wird.

13. Verfahren nach Anspruch 12, **dadurch gekennzeichnet, dass** der Betrieb der Behälterbehandlungsanlage (1) über das Empfangsgerät (11) gesteuert wird.

14. Verfahren nach einem der vorhergehenden Ansprüche, **dadurch gekennzeichnet, dass** die Behälterbehandlungsvorrichtung (2) als Reinigungsmaschine zum Reinigen von Glasbehältern, insbesondere Glasflaschen, ausgebildet ist, wobei die Glasbehälter das bereitzustellende Betriebs- und/oder Verbrauchsmaterial sind,
- wobei als aktueller Betriebs- und/oder Verbrauchsparameter (BVP) ein Behälterdurchsatz der Reinigungsmaschine erfasst wird,
- wobei für die Bestimmung des Bedarfs der bereitzustellenden Glasbehälter zumindest eine Außentemperatur als physikalischer Umgebungsparameter (PUP) ermittelt wird,
- und wobei die ausgegebene Handlungsanweisung (10) umfasst, dass der Betrieb der Reinigungsmaschine und/oder die Bereitstellung der Glasbehälter für die Reinigungsmaschine angepasst wird.

15. Behälterbehandlungsanlage (1) mit wenigstens einer Behälterbehandlungsvorrichtung (2) zum Behandeln von Behältern, umfassend:
- eine Einrichtung zum Ermitteln von zumindest einem aktuellen Betriebs-und/oder Verbrauchsparameter (BVP) der zumindest einen Behälterbehandlungsvorrichtung (2),
- eine Einrichtung zum Ermitteln von zumindest einem, den aktuellen Betriebs-und/oder Verbrauchsparameter (BVP) beeinflussenden, physikalischen Umgebungsparameter (PUP),
- eine Analyse- und/oder Steuereinrichtung (7, 9), die dazu eingerichtet ist, einen Bedarf zumindest eines bereitzustellenden Betriebs- und/oder Verbrauchsmaterials in Abhängigkeit des ermittelten aktuellen Betriebs-und/oder Verbrauchsparameters (BVP) sowie in Abhängigkeit des ermittelten aktuellen physikalischen Umgebungsparameters (PUP) zu bestimmen und bei Abweichung des ermittelten Bedarfs an bereitzustellenden Betriebs-und/oder Verbrauchsmaterial von einem zulässigen Bedarfswert zumindest eine Handlungsanweisung (10) zum Betrieb der Behälterbehandlungsanlage (1) zu erzeugen.
